# EUROPEAN PATENT APPLICATION

(11) **EP 3 553 345 A1**
(43) Date of publication of application: **16.10.2019**
(21) Application number: 18166510.0
(22) Date of filing: 10.04.2018
(51) Int. Cl.: F16H 57/04, F16H 25/22, H02K 7/08, F16H 25/20, H02K 7/06

(54) **ACTUATING CYLINDER WITH LUBRICANT REFILLING CHANNEL**

(71) Applicant: SKF Motion Technologies AB, 51550 Gothenburg (SE)
(72) Inventor: Benoit, Laurent, 73800 La Chavanne (FR)
(74) Representative: Heyerhoff Geiger & Partner Patentanwälte PartGmbB

(57) **Abstract**

The invention relates to an actuating cylinder (10) comprising a housing (12); an actuation rod (14) mounted to be movable longitudinally relative to the housing (12); a push tube (15) connected to the actuation rod (14); an electric motor (16) provided with a stator (20) and with a rotating rotor shaft (24); a screw mechanism (18) including a screw (40) connected to the actuation rod (14), the rotor shaft (24) being disposed around the screw (40), and a plurality of rolling elements (42), the rotational movement of the rotor shaft (24) being converted into a linear movement in translation of the screw (40) and of the actuation rod (14). A lubrication channel (50) extends through the push tube (15), the actuation rod (14) and the screw (40), said lubrication channel (50) comprising an inlet portion (50-4) open to an external surface of the push tube (15) and provided with a temporary plug or nipple (52), and an outlet portion (50-5) open to the external thread (41) of screw (40).

## Description

### TECHNICAL FIELD OF THE I NVENTI ON

The invention relates to the field of actuating cylinders, in particular the field of compact electromechanical cylinders with integrated electric motor.

### BACKGROUND OF THE INVENTION

An electromechanical actuating cylinder generally comprises a housing, an actuation rod mounted so as to be movable longitudinally relative to the housing, a push tube connected to a first end of the actuation rod, an electric motor having a stator and a rotor shaft, and a mechanism for converting the rotational movement of the rotor shaft of the motor into a linear movement in translation of the actuation rod.

Such mechanism can be a screw mechanism including a screw provided with an external thread, a nut disposed around the screw and having an internal thread, and a plurality of rolling elements engaged with the internal and external threads. Said elements can be rollers and the mechanism is of roller screw type, or balls and the mechanism is of ball screw type.

In the case of inverted planetary screw mechanism, the nut is driven in rotational movement by the rotor of the electric motor, the screw having then a translating movement by the intermediate of the rolling elements. Said screw is connected to a second end of the rod. In order to guide in rotation and support the nut, the electromechanical cylinder further comprises bearings arranged between the nut and the housing. The nut is advantageously a rotor shaft or connected to the rotor shaft.

The screw mechanism is filled with lubricant, in particular grease, to lubricate the rolling contact surfaces between the nut, the rolling elements, and the screw. The aim is to reduce friction and heat exchange, so as to reduce wear of the parts and risks of break. However, the lubricant quality decreases with time and the rotation movements.

During maintenance operations, the screw mechanism of an electromechanical cylinder is refilled with new lubricant, the worn lubricant being replaced. Several techniques and designs are in use.

In the field of electromechanical actuating cylinders in use in industrial applications, regular maintenance operations are performed during which the screw mechanism is extracted. Worn lubricant is drained and new lubricant is supplied, for example by a needle, between the nut, the rolling elements and the screw. Finally, the screw mechanism is reassembled in the actuating cylinder. However, such maintenance operations are expensive, and require to immobilize the industrial application, for example a manufacturing machine, frequently and during a long time.

It is also known to provide an actuating cylinder with inlet and outlet lubrication ports, both in fluidic connection with the screw mechanism. During maintenance operations, the cylinder is connected to an external lubricant pump, which supply new lubricant by the inlet port, the worn lubricant being pushed out through the outlet port. However, the ports are only connected to outside of the screw mechanism, and an important amount of lubricant has to be supplied.

### SUMMARY OF THE INVENTION

The aim of the invention is to solve the above difficulties.

To this end, the invention relates to an actuating cylinder comprising a housing; an actuation rod mounted to be movable longitudinally relative to the housing; a push tube connected to a first rod end; an electric motor provided with a stator and with a rotating rotor shaft; and a screw mechanism including a screw provided with an external thread and connected to a second rod end, the rotor shaft being disposed around the screw and having an internal thread, and a plurality of rolling elements engaged with the internal and external threads, the rotational movement of the rotor shaft being converted into a linear movement in translation of the screw and of the actuation rod.

According to the invention, the actuating cylinder is provided with a lubrication channel that extends through the push tube, the actuation rod and the screw. Said lubrication channel comprises an inlet portion open to an external surface of the push tube and provided with a temporary plug or nipple, and an outlet portion open to the external thread of screw.

According to further aspects of the invention which are advantageous but not compulsory, such an actuating may incorporate one or several of the following features:
- The housing comprises a main body, a front cover, and a rear cover.
- The actuating cylinder further comprises at least one bearing for guiding in rotation and supporting the rotor shaft with respect to the housing.
- The rolling elements of screw mechanism are rollers having each an external thread which is engaged in the external and internal threads of the screw and the rotor shaft, respectively.
- The rolling elements of screw mechanism are balls engaged in external and internal threads of screw and rotor shaft, respectively.
- The push tube is screwed to the first rod end.
- The screw is screwed to a second rod end.
- The actuation rod and the screw are formed integral.
- The push tube comprises a lubrication channel portion formed as a blind hole that is open axially towards the actuation rod.
- The screw comprises a lubrication channel portion formed as a blind hole that is open axially towards the actuation rod.
- The actuation rod comprises a bore that is open axially towards the push tube on front axial side, and open axially towards the screw on rear axial side.
- The lubrication channel comprises an axial cylindrical tube extending through a bore of the actuation rod.
- The axial cylindrical tube comprises a first end connected to the lubrication channel portion of push tube.
- The axial cylindrical tube comprises a second end connected to the lubrication channel portion of screw.
- The inlet portion extends radially.
- The outlet portion extends radially.

### BRIEF DESCRIPTION OF THE DRAWINGS

The invention will now be explained in correspondence with the annexed figures, as illustrative examples, without restricting the object of the invention. In the annexed figures:
- Figure 1 is an axial sectional view of an actuating cylinder in accordance with a first exemplary embodiment of the present invention;
- Figure 2 is an axial sectional view of an actuating cylinder in accordance with a second exemplary embodiment of the present invention;
- Figure 3 is an axial sectional view of an actuating cylinder in accordance with a third exemplary embodiment of the present invention; and
- Figure 4 is an axial sectional view of an actuating cylinder in accordance with a fourth exemplary embodiment of the present invention.

### DETAILED DESCRIPTION OF SOME EMBODIMENTS

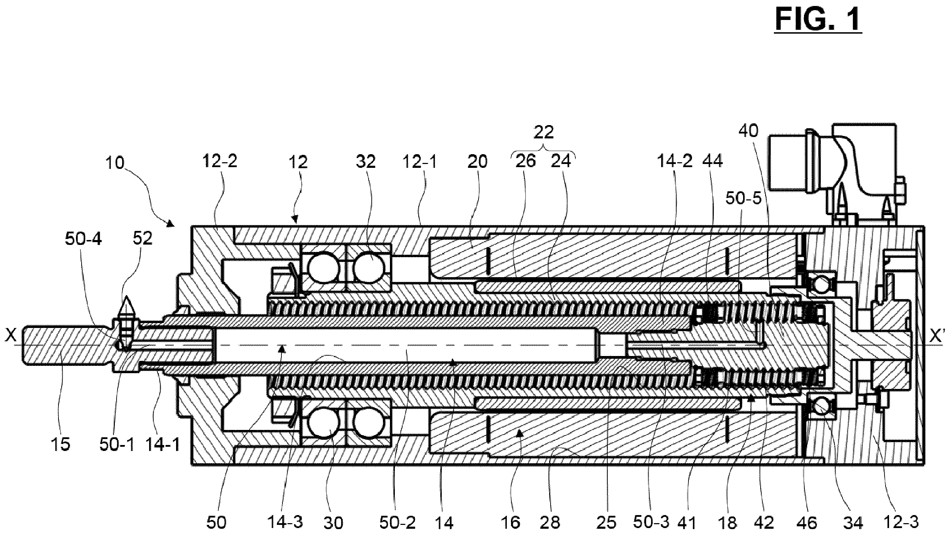

In Figure 1, a compact electromechanical actuating cylinder, referenced 10 as a whole, extends along a longitudinal axis X-X'. The actuating cylinder 10 comprises a housing 12, an actuation rod 14 movable axially and coaxially to the axis X-X', a push tube 15 connected to a first end 14-1 of the actuation rod 14, an electric motor 16, and an inverted planetary roller screw mechanism 18 disposed inside the housing 12. The screw mechanism 18 is disposed radially between the electric motor 16 and the actuation rod 14.

The mechanism 18 allows the conversion of rotation movement of the electric motor 16 into a linear movement in translation of the actuation rod 14 along the axis X-X'. The electric motor 16 and the screw mechanism 18 are housed entirely within the housing 12. The actuation rod 14 extends through the housing 12 and protrudes axially to the outside.

In the illustrated exemplary embodiment, the housing 12 comprises a tubular main body 12-1, a front cover 12-2 and a rear cover 12-3, said covers being each mounted at one end of the main body 12-1. The actuation rod 14 extends through an opening of the front cover 12-2.

The electric motor 16 comprises a stator 20 fixed on the housing 12, and a rotor 22. The stator 20 is fixed in a bore 28 of the main body 12-1 of housing 12. The rotor 22 is provided with a tubular rotor shaft 24 and a plurality of permanent magnets 26 supported by said shaft 24.

The rotor shaft 24 extends axially on either side of the stator 20. The electric motor 16 can be of the brushless type, or alternatively of any other suitable type.

In order to guide in rotation and support the rotor shaft 24 with respect to the housing 12, the actuating cylinder 10 also comprises two front rolling bearings 30, 32 and one rear rolling bearing 34. In the illustrated exemplary embodiment, the bearings 30, 32, 34 are each of ball type. Alternatively, the bearing may be of any other suitable types, for example with tapered rollers or cylindrical rollers.

The push tube 15 is annular and comprises a portion with an outer thread that is screwed in an inner thread provided to a bore portion of the first end 14-1 of actuation rod 14. Alternatively, the push tube 15 may be connected to the actuation rod 14 by any other suitable means, for example by gluing or by fixing screws.

The inverted planetary roller screw mechanism 18 comprises a screw 40, which is coaxial and connected to a second end 14-2 of the actuation rod 14. In the illustrated embodiment, a portion of screw 40 is provided with an outer thread that is screwed in an inner thread provided to a bore portion of the second end 14-2 of actuation rod 14. Alternatively, the screw 40 may be connected to the actuation rod 14 by any other suitable means, for example by gluing or by fixing screws. The push tube 15 and the screw 40 are axially opposite one to another with respect to the actuation rod 14.

The rotor shaft 24 is of tubular shape, is coaxial with the screw 40 and is disposed around said screw 40. The screw 40 comprises an external thread 41, and the rotor shaft 24 comprises an internal thread 25 of which the inner diameter is greater than the outer diameter of the external thread 41 of screw 40.

The screw mechanism 18 further comprises a plurality of rollers 42 having each an external thread (not referenced) which is engaged in the external and internal threads 41, 25 of the screw 40 and the rotor shaft 24, respectively. The rollers 42 are identical to one another and are distributed uniformly around the screw 40. Each roller 42 extends along an axis parallel to the screw axis. As is known per se, each roller 42 comprises, at each end (not referenced), an outer toothing engaged with a synchronization toothing of the screw, and a journal extending axially to the outside from the toothing and housed in a recess in one of the spacer rings 44, 46 mounted around said screw 40.

As an alternate not shown, the rolling elements are balls engaged in external and internal threads of screw and rotor shaft, respectively.

The actuation rod 14 is connected to the screw 40 of the screw mechanism 18. The rotation of the rotor shaft 24 of the electric motor 16 is converted into a translation of the screw 40 and of the actuation rod 14 along the axis X-X'.

According to a first exemplary embodiment of the present invention, the actuating cylinder 10 is provided with a lubrication channel 50 that extends through the push tube 15, the actuation rod 14 and the screw 40.

The lubrication channel 50 comprises a first portion 50-1 consisting in a cylindrical blind hole provided through the push tube 15. The first portion 50-1 opens axially towards the actuation rod 14.

The actuation rod 14 is a tube and comprises a cylindrical bore 14-3 forming a second portion 50-2 of lubrication channel 50. The second portion 50-2 opens axially towards the push tube 15 on front axial side, and opens axially towards the screw 40 on rear axial side. In this first embodiment, the second portion 50-2 of lubricant channel 50 comprises at each rod end 14-1 and 14-2 an inner threaded portion that is screwed with the push tube 15 and the screw 40, respectively.

The lubrication channel 50 comprises a third portion 50-3 consisting in a cylindrical blind hole provided through the screw 40. The third portion 50-3 opens axially towards the actuation rod 14.

The three portions 50-1, 50-2, and 50-3 extend substantially coaxially and are connected one to another by means of the screwed connection between the push tube 15 and the first rod end 14-1 on front axial side, and the screwed connection between the screw 40 and the second rod end 14-2 on rear axial side.

The lubrication channel 50 further comprises an inlet portion 50-4 that extends radially from the first portion 50-1 provided to the push tube 15. The inlet portion 50-4 opens radially to an external surface of the push tube 15. The inlet portion 50-4 is provided with a temporary plug or nipple 52 that permits to close the inlet portion 50-4, and then the lubrication channel 50, during the service of the actuating cylinder 10. The temporary plug or nipple 52 is removable, in particular during maintenance operations, the inlet portion 50-4 being then connectable to a lubricant pump.

The lubrication channel 50 also comprises an outlet portion 50-5 that extends radially from the third portion 50-3 provided to the screw 40. The outlet portion 50-5 opens radially to the external thread 41 of screw 40.

When the actuating cylinder is in service, the temporary plug or nipple 52 closes the inlet portion 50-4 of channel 50. The channel is then closed to the outside of the actuating cylinder 10.

During refilling maintenance operations, the temporary plug or nipple 52 is removed from the inlet portion 50-4. A lubricant pump (not represented) is connected to the inlet portion 50-4 and lubricant, for example grease, is supplied to the lubricant channel 50. The lubricant flows through the channel 50 successively from the inlet portion 50-4 to the first portion 50-1, the second portion 50-2, the third portion 50-3 and then to the outlet portion 50-5. The outlet portion 50-5 is directly open to the external thread 41 of screw, and then to the internal chamber defined between the screw 40 and the rotor shaft 24 and provided with threaded rollers 42 of screw mechanism 18. The lubricant is then directly supplied to the contact surfaces between the screw, the rotor shaft, and the rollers, ie. the surfaces that require lubrication to reduced friction and heat exchange.

Thanks to the invention, the lubricant is supplied directly and only where needed. Only the exact necessary quantity of lubricant is supplied.

Another advantage of the present invention is that the maintenance operations do not need to be extracted and then reassembled after relubrication. The lubrication of the actuating cylinder 10 is simple, efficient and requires a relative short time.

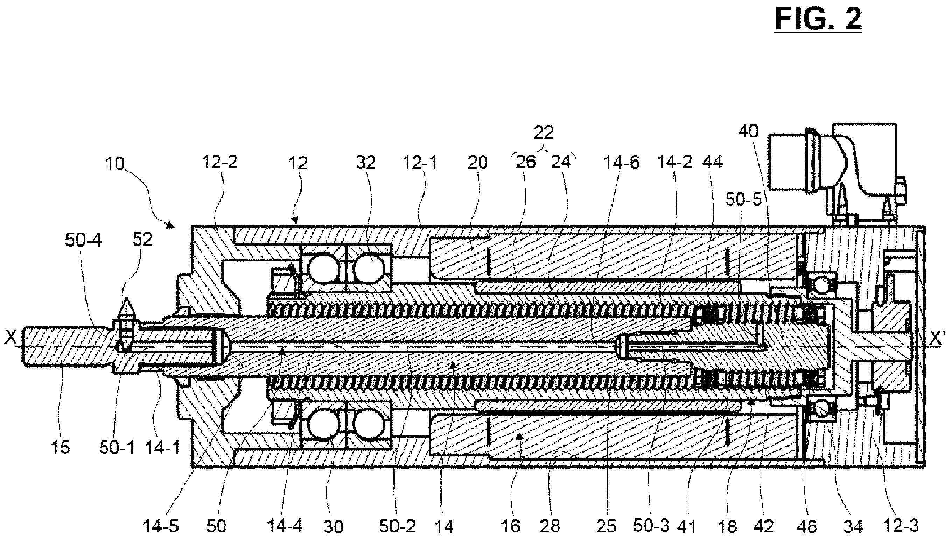

A second exemplary embodiment of the present invention is illustrated in Figure 2, wherein the same elements have the same references, and differs from the previous embodiment in that the bore of actuation rod 14 forming the second portion 50-2 of lubrication channel 50 is of reduced diameter.

The bore of actuation rod 14 comprises a main cylindrical portion 14-4, and two throttle portions 14-5 and 14-6.

The main cylindrical portion 14-4 has a diameter smaller than the inner threaded portions of rod ends 14-1, 14-2. The first throttle portion 14-5 at first rod end 14-1 permits a diameter transition between the inner threaded portion of large diameter and the main cylindrical portion 14-4 of small diameter. Similarly, the second throttle portion 14-6 at second rod end 14-2 permits a diameter transition between the inner threaded portion of large diameter and the main cylindrical portion 14-4 of small diameter.

The second portion 50-2 of lubrication channel 50 is formed by the main cylindrical portion 14-4, and the two throttle portions 14-5 and 14-6. The second portion 50-2 is in fluidic connection with the first portion 50-1 by the intermediate of the first throttle portion 14-5. The second portion 50-2 is in fluidic connection with the third portion 50-1 by the intermediate of the second throttle portion 14-6.

The second portion 50-2 with the main cylindrical portion 14-4 illustrated in Figure 2 is of smaller diameter than that of the bore 14-3 of the first embodiment illustrated in Figure 1. The portion 14-4 will receive a smaller amount of lubricant. Then a smaller quantity of lubricant is stored there between two refilling maintenance operations, with the risk of denaturing, compared to the first embodiment of the invention.

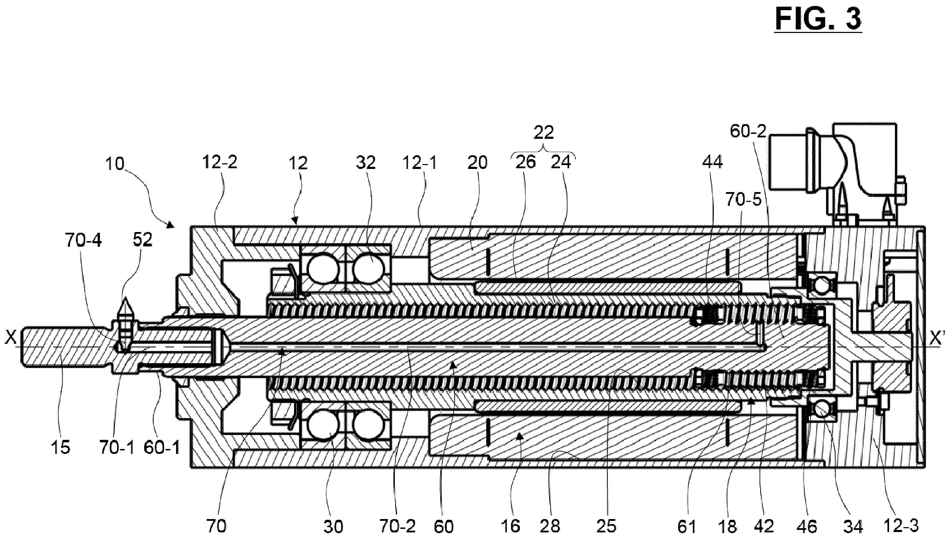

A third exemplary embodiment of the present invention is illustrated in Figure 3, wherein the same elements have the same references, and differs from the second embodiment in that an actuation rod 60 and the screw of screw mechanism 18 are formed integral.

The actuation rod 60 illustrated in Figure 3 extends along the axis X-X' and comprises a first rod end 60-1 screwed with the push tube 15 on front axial side. The actuation rod comprises a second rod end 60-2 provided with an outer thread 61, the rollers 42 of screw mechanism being engaged with the inner thread 25 of rotor shaft 24 and with the outer thread 61 of second rod end 60-2.

The actuating cylinder 10 is provided with a lubrication channel 70 that extends through the push tube 15, the actuation rod 60 formed integral with the screw.

The lubrication channel 70 comprises a first portion 70-1 consisting in a cylindrical blind hole provided through the push tube 15. The first portion 70-1 opens axially towards the actuation rod 60.

The actuation rod 60 comprises a second portion 70-2 consisting in a cylindrical blind hole provided through the actuation rod 60. The second portion 70-2 opens axially towards the push tube 15.

The two portions 70-1 and 70-2 extend substantially coaxially and are connected one to another by means of the screwed connection between the push tube 15 and the first rod end 60-1 on front axial side.

The lubrication channel 70 further comprises an inlet portion 70-4 that extends radially from the first portion 70-1 provided to the push tube 15. The inlet portion 70-4 opens radially to an external surface of the push tube 15. The inlet portion 70-4 is provided with a temporary plug or nipple 52 that permits to close the inlet portion 70-4, and then the lubrication channel 70, during the service of the actuating cylinder 10. The temporary plug or nipple 52 is removable, in particular during maintenance operations, the inlet portion 70-4 being then connectable to a lubricant pump.

The lubrication channel 70 also comprises an outlet portion 70-5 that extends radially from the second portion 70-2 provided to the actuation rod 60. The outlet portion 70-5 is provided in the second rod end 60-2 provided with the outer thread 61. The outlet portion 70-5 opens radially to the external thread 61.

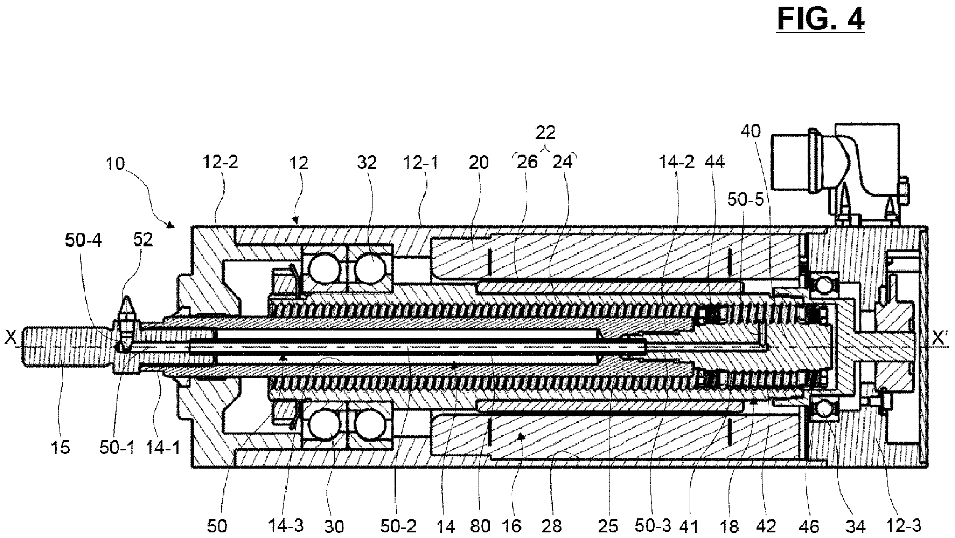

A fourth exemplary embodiment of the present invention is illustrated in Figure 4, wherein the same elements have the same references, and differs from the first embodiment of Figure 1 in that the second portion 50-2 of lubricant channel 50 is formed by a tube 80.

The actuation rod 14 is a tubular and comprises a cylindrical bore 14-3. The lubrication 50 comprises a second portion 50-2 that consists in a cylindrical axial tube 80 arranged in said rod bore 14-3.

The tube 80 comprises a first end fitted in a cylindrical recess of the push tube 15, the second portion 50-2 being in fluidic connection with the first portion 50-1 of the lubrication channel 50. The tube 80 comprises a second end fitted in a cylindrical recess of the screw 40, the second portion 50-2 being in fluidic connection with the third portion 50-3 of the lubrication channel 50.

The tube 80 is of smaller diameter than that of the bore 14-3, and then permits to receive and store a smaller amount of lubricant. Moreover, the tube 80 can be easily mounted in the screw 40 and the push tube 15. On the contrary a bore with a main cylindrical portion 14-4 of small diameter as illustrated in Figure 2 is quite complex to manufacture due to the important ratio between the axial length and the diameter.

Representative, non-limiting examples of the present invention were described above in details with reference to the attached drawings. This detailed description is merely intended to teach a person of skill in the art further details for practicing preferred aspects of the present teachings and is not intended to limit the scope of the invention. Furthermore, each of the additional features and teachings disclosed above may be utilized separately or in conjunction with other features and teachings to provide improved actuating cylinder.

Moreover, various features of the above-described representative examples, as well as the various independent and dependant claims below, may be combined in ways that are not specifically and explicitly enumerated in order to provide additional useful embodiments of the present teachings.

## Claims

1. Actuating cylinder (10) comprising:
- a housing (12);
- an actuation rod (14; 60) mounted to be movable longitudinally relative to the housing (12);
- a push tube (15) connected to a first rod end (14-1; 60-1);
- an electric motor (16) provided with a stator (20) and with a rotating rotor shaft (24); and
- a screw mechanism (18) including a screw (40; 60-2) provided with an external thread (41; 61) and connected to a second rod end (14-2; 60-2), the rotor shaft (24) being disposed around the screw (40; 60-2) and having an internal thread (25), and a plurality of rolling elements (42) engaged with the internal and external threads (25, 41; 61), the rotational movement of the rotor shaft (24) being converted into a linear movement in translation of the screw (40; 60-2) and of the actuation rod (14; 60);
**characterized in that** the actuating cylinder (10) is provided with a lubrication channel (50; 70) that extends through the push tube (15), the actuation rod (14; 60) and the screw (40; 60-2), said lubrication channel (50; 70) comprising an inlet portion (50-4; 70-4) open to an external surface of the push tube (15) and provided with a temporary plug or nipple (52), and an outlet portion (50-5; 70-5) open to the external thread (41; 61) of screw (40; 60-2).

2. Actuating cylinder according to the claim 1, wherein the push tube (15) comprises a lubrication channel portion (50-1; 70-1) formed as a blind hole that is open axially towards the actuation rod (14; 60).

3. Actuation cylinder according to any of the preceding claims, wherein the screw (40; 60-2) comprises a lubrication channel portion (50-3; 70-2) formed as a blind hole that is open axially towards the actuation rod (14; 60).

4. Actuating cylinder according to the any of the preceding claims, wherein the push tube (15) is screwed to the actuation rod (14).

5. Actuating cylinder according to any of the preceding claims, wherein the screw (40) is screwed to the actuation rod (14).

6. Actuating cylinder according to any of the claims 1 to 4, wherein the actuation rod (60) and the screw are formed integral.

7. Actuating cylinder according to the any of the claims 1 to 5, wherein the actuation rod (14) comprises a bore (14-3; 14-4, 14-5, 14-6) that is open axially towards the push tube (15) on front axial side, and open axially towards the screw (40) on rear axial side.

8. Actuating cylinder according to the claim 7, wherein the lubrication channel (50) comprises an axial cylindrical tube (80) extending through the bore (14-3) of the actuation rod (14).

9. Actuating cylinder according to the claim 8, wherein the axial cylindrical tube (80) comprises a first end connected to the lubrication channel portion (50-1) of push tube (15).

10. Actuating cylinder according to the claim 8 or 9, wherein the axial cylindrical tube (80) comprises a second end connected to the lubrication channel portion (50-3) of screw (40).

11. Actuating cylinder according to any of the preceding claims, wherein the inlet portion (50-4; 70-4) extends radially.

12. Actuating cylinder according to any of the preceding claims, wherein the outlet portion (50-5) extends radially.

13. Actuating cylinder according to any of the preceding claims, wherein the housing (12) comprises a main body (12-1), a front cover (12-2), and a rear cover (12-3).

14. Actuating cylinder according to any of the preceding claims, wherein the actuating cylinder (10) further comprises at least one bearing (30, 32, 34) for guiding in rotation and supporting the rotor shaft (24) with respect to the housing (12).

15. Actuating cylinder according to any of the preceding claims, wherein the rolling elements of screw mechanism (18) are rollers (42) having each an external thread which is engaged in the external and internal threads (41, 61; 25) of the screw (40; 60-2) and the rotor shaft (24), respectively.
